# EUROPEAN PATENT APPLICATION

(11) **EP 4 302 995 A1**
(43) Date of publication of application: **10.01.2024**
(21) Application number: 23183334.4
(22) Date of filing: 04.07.2023
(51) Int. Cl.: B32B 27/08, B32B 27/18, B32B 27/32, C08J 5/18, C08L 23/06

(54) **POLYETHYLENE CLING FILM**

(30) Priority: 07.07.2022 KR 20220083451
(71) Applicant: SK Innovation Co., Ltd., Seoul 03188 (KR); SK Geo Centric Co., Ltd., Jongno-gu Seoul 03161 (KR)
(72) Inventor: JO, Byoung Cheon, 34124 Daejeon (KR); LEE, Sung Won, 34124 Daejeon (KR); KIM, Hak Bin, 34124 Daejeon (KR); HONG, Dae Sig, 03161 Seoul (KR); SONG, Jun Cheol, 34124 Daejeon (KR)
(74) Representative: Frick, Robert

(57) **Abstract**

Provided is a polyethylene cling film, and the polyethylene cling film according to one embodiment has a 3-layer structure and also has a specific range of a difference between the melt index of an outer layer and/or an inner layer and the melt index of a middle layer, thereby showing excellent adhesiveness, resilience, usage sensation, and the like for use as a packaging film for food and/or non-food.

## Description

### TECHNICAL FIELD

The following disclosure relates to a polyethylene cling film having high resilience and adhesion and excellent usage sensation.

### BACKGROUND

Since a polyethylene-based packaging film for food, medicines, and the like serves to block food, medicines, and the like from the outside to safely store them, adhesion, anti-fogging, shrinkage, and the like are very important for the packaging film.

Though a PVC packaging film is mainly used for packaging vegetables, fruits, and the like, a polyvinyl chloride (PVC) film releases dioxin which is harmful when incinerated and it is difficult to recycle the film, and since recycling quotas for commercial PVC film manufacturers has been increased by the enforcement of the act on the promotion of saving and recycling of resources for packaging material rating system on 2019, the future use of the PVC film may be limited.

Meanwhile, a polyolefin film has been introduced for replacing the PVC film and is currently commercially available, but has poor adhesiveness and elasticity as compared with a PVC wrap, and thus, there is a problem of poor commercial value due to messy packaging in packing goods or poor anti-fogging properties.

### SUMMARY

An embodiment of the present disclosure is directed to providing a polyethylene cling film having excellent resilience and adhesion.

Another embodiment of the present disclosure is directed to providing a packaging film comprising the polyethylene cling film.

In one general aspect, a polyethylene cling film comprises: an outer layer, a middle layer, and an inner layer, wherein the outer layer, the middle layer, and the inner layer independently of one another comprise an ethylene copolymer, each layer has a melt index (MI) of 1.0 g/10 min to 5.0 g/10 min as measured in accordance with ASTM D1238, an absolute value of [the melt index of the outer layer or the inner layer] - [the melt index of the middle layer] is 1.0 g/10 min or less, the outer layer and the inner layer have a density of 0.89 g/cm³ to 0.93 g/cm³, and the middle layer has a density of 0.87 g/cm³ to 0.91 g/cm³.

Other features and aspects will be apparent from the following detailed description, the drawings, and the claims.

### DETAILED DESCRIPTION OF EMBODIMENTS

Hereinafter, one implementation according to the present disclosure will be described in detail.

Meanwhile, the embodiments of one implementation may be modified in various different forms, and the scope of one implementation is not limited to the embodiments set forth herein. In addition, the embodiments of one implementation are provided so that one implementation will be described more completely to a person with ordinary skill in the art. Furthermore, throughout the specification, unless explicitly described to the contrary, "comprising" any constituent elements will be understood to imply further inclusion of other constituent elements. Unless the context clearly indicates otherwise, the singular forms used in the specification and the scope of the appended claims are intended to include the plural forms.

The numerical range used in the present specification comprises all values within the range comprising the lower limit and the upper limit, increments logically derived in a form and span in a defined range, all double limited values, and all possible combinations of the upper limit and the lower limit in the numerical range defined in different forms. As an example, when it is defined that a content of a composition is 10% to 80% or 20% to 50%, it should be interpreted as being that a numerical range of 10% to 50% or 50% to 80% is also described in the specification of the present disclosure. Unless otherwise defined in the present specification, values which may be outside a numerical range due to experimental error or rounding of a value are also comprised in the defined numerical range.

Hereinafter, unless otherwise particularly defined in the present specification, "about" may be considered as a value within 30%, 25%, 20%, 15%, 10%, 5%, 4%, 3%, 2%, 1%, 0.5%, 0.1%, 0.05% or 0.01% of a stated value.

One implementation provides a polyethylene cling film comprising a 3-layer structure comprising: an outer layer, a middle layer, and an inner layer, wherein the outer layer, the middle layer, and the inner layer independently of one another comprise an ethylene copolymer, each layer independently has a melt index (MI) of 1.0 g/10 min to 5.0 g/10 min as measured in accordance with ASTM D1238, an absolute value of [the melt index of the outer layer or the inner layer] - [the melt index of the middle layer] is 1.0 g/10 min or less, the outer layer and the inner layer have a density of 0.89 g/cm³ to 0.93 g/cm³, and the middle layer has a density of 0.87 g/cm³ to 0.91 g/cm³.

In one embodiment, the melt index and/or the density of the outer layer, the middle layer, and/or the inner layer may be expressed from the ethylene copolymer comprised in each layer. Herein, as the density of each layer or the ethylene copolymer comprised in each layer is lower, resilience and adhesiveness tend to be better, but when the density is unduly lowered to a certain range or lower, the film becomes too soft and the adhesiveness becomes excessively strong, and thus, the left and right widths of the film become uneven or the film is rolled during the production of the film, and thus, it may not be easy to produce the film. In addition, the film may be easily deformed or after the films are easily adhered to each other, it is difficult to peel off (unwind) the film, and thus, difficulties in dealing with the film may be increased.

Regarding this, the polyethylene cling film according to one embodiment has a lamination structure of three layers (outer layer, middle layer, inner layer), each layer independently having a melt index of 1.0 g/min to 5.0 g/10 min in accordance with ASTM D1238 and also satisfies a difference between the melt index of the outer layer and/or the inner layer and the melt index of the middle layer of 1.0 g/10 min or less, thereby having resilience, adhesiveness, elongation at break, and the like which are effective for use as packaging of food and/or non-food, and increasing easiness in the production process of the film.

In one embodiment, the lamination structure may be a structure produced by laminating each layer in turn (for example, produced by repeating application and drying from the outer layer or the inner layer in turn), may be produced by a method of producing each layer individually and then performing lamination, or may be produced as two or more or three layers at once by a co-extrusion method.

In one embodiment, the melt index is not necessarily limited to the range, and for example, may be 2.0 g/10 min to 5.0 g/10 min, 2.5 g/10 min to 4.0 g/10 min, 2.5 g/10 min to 3.5 g/10 min, 2.6 g/10 min to 3.4 g/10 min, or 2.8 g/10 min to 3.2 g/10 min.

In one embodiment, the density of the outer layer or the inner layer is not necessarily limited, and may be for example, 0.89 g/cm³ to 0.92 g/cm³, 0.895 g/cm³ to 0.92 g/cm³, 0.895 g/cm³ to 0.93 g/cm³, 0.90 g/cm³ to 0.92 g/cm³, or 0.908 g/cm³ to 0.919 g/cm³.

In one embodiment, the density of the middle layer is not necessarily limited, and may be for example, 0.875 g/cm³ to 0.91 g/cm³, 0.87 g/cm³ to 0.905 g/cm³, 0.875 g/cm³ to 0.905 g/cm3, 0.88 g/cm³ to 0.91 g/cm³, or 0.88 g/cm³ to 0.90 g/cm³.

In one embodiment, the copolymer may be a random copolymer, a block copolymer, a graft copolymer, an alternating copolymer, and/or a gradient copolymer.

In one embodiment, the ethylene copolymer may comprise or be an ethylene-α-olefin copolymer, or may comprise or be a linear low-density polyethylene (LLDPE) and/or a polyolefin plastomer (POP). In one embodiment, the linear low-density polyethylene may comprise or be a (poly)ethylene copolymer which is polymerized by a Ziegler-Natta catalyst (Z/N) catalyst, and the polyolefin plastomer may comprise or be a (poly)ethylene copolymer which is polymerized by a metallocene catalyst and may have a distribution in which a low-density area and a high-density area are mixed.

In one embodiment, the copolymer may not be crosslinked or may be a blend in a state in which two or more partially crosslinked polymers are combined, but is not necessarily limited thereto.

In one embodiment, the ethylene copolymer comprised in the outer layer and/or the inner layer may independently of each other comprise a linear low-density polyethylene having a melt index of 2.0 g/10 min to 4.0 g/10 min as measured in accordance with ASTM D1238 and a density of 0.89 g/cm³ to 0.93 g/cm³. Herein, the linear low-density polyethylene may have a melt index of, for example, 2.5 g/10 min to 4.0 g/10 min, 2.5 g/10 min to 3.5 g/10 min, 2.6 g/10 min to 3.4 g/10 min, or 2.8 g/10 min to 3.2 g/10 min, but is not necessarily limited thereto. The linear low-density polyethylene may have a density of, for example, 0.89 g/cm³ to 0.92 g/cm³, 0.895 g/cm³ to 0.92 g/cm³, 0.895 g/cm³ to 0.93 g/cm³, 0.90 g/cm³ to 0.92 g/cm³, or 0.908 g/cm³ to 0.919 g/cm³, but is not necessarily limited thereto.

In one embodiment, the ethylene copolymer comprised in the outer layer and/or the inner layer may independently of each other further comprise a polyolefin plastomer having a melt index of 2.0 g/10 min to 5.0 g/10 min as measured in accordance with ASTM D1238 and a density of 0.87 g/cm³ to 0.91 g/cm³. Herein, the outer layer and/or the inner layer may be prepared from a state in which the linear low-density polyethylene and the polyolefin plastomer are mixed or blended. Herein, the polyolefin plastomer may have a melt index of, for example, 1.0 g/10 min to 5.0 g/10 min, 2.5 g/10 min to 5.0 g/10 min, 2.5 g/10 min to 4.0 g/10 min, 2.8 g/10 min to 3.8 g/10 min, or 3.0 g/10 min to 3.5 g/10 min, but is not necessarily limited thereto. The polyolefin plastomer may have a density of, for example, 0.875 g/cm³ to 0.91 g/cm³, 0.87 g/cm³ to 0.905 g/cm³, 0.875 g/cm³ to 0.905 g/cm3, 0.88 g/cm³ to 0.91 g/cm³, or 0.88 g/cm³ to 0.90 g/cm³, but is not necessarily limited thereto.

In one embodiment, when the ethylene copolymer comprised in the outer layer and/or the inner layer comprises a linear low-density polyethylene and a polyolefin plastomer, a weight ratio between the linear low-density polyethylene and the polyolefin plastomer may be 20:80 to 60:40, 30:70 to 50:50, 35:65 to 45:55, or 40:60.

In one embodiment, the middle layer may serve to implement resilience properties. Therefore, the ethylene copolymer comprised in the middle layer may have a lower density than the ethylene copolymer comprised in the outer layer and/or the inner layer. In one embodiment, the ethylene copolymer comprised in the middle layer may comprise a polyolefin plastomer having a melt index of 2.0 g/10 min to 5.0 g/10 min as measured in accordance with ASTM D1238 and a density of 0.87 g/cm³ to 0.91 g/cm³. Herein, the polyolefin plastomer may have a melt index of, for example, 1.0 g/10 min to 5.0 g/10 min, 2.5 g/10 min to 5.0 g/10 min, 2.5 g/10 min to 4.0 g/10 min, 2.8 g/10 min to 3.8 g/10 min, or 3.0 g/10 min to 3.5 g/10 min, but is not necessarily limited thereto. The polyolefin plastomer may have a density of, for example, 0.875 g/cm³ to 0.91 g/cm³, 0.87 g/cm³ to 0.905 g/cm³, 0.875 g/cm³ to 0.905 g/cm³, 0.88 g/cm³ to 0.91 g/cm³, or 0.88 g/cm³ to 0.90 g/cm³, but is not necessarily limited thereto.

In one embodiment, the ethylene copolymer comprised in the middle layer may further comprise a linear low-density polyethylene having a melt index of 2.0 g/10 min to 4.0 g/10 min as measured in accordance with ASTM D1238 and a density of 0.89 g/cm³ to 0.93 g/cm³. Herein, the outer layer and/or the inner layer may be prepared from a state in which the linear low-density polyethylene and the polyolefin plastomer are mixed or blended. The linear low-density polyethylene may have a melt index of, for example, 2.5 g/10 min to 4.0 g/10 min, 2.5 g/10 min to 3.5 g/10 min, 2.6 g/10 min to 3.4 g/10 min, or 2.8 g/10 min to 3.2 g/10 min, but is not necessarily limited thereto. The linear low-density polyethylene may have a density of, for example, 0.89 g/cm³ to 0.92 g/cm³, 0.895 g/cm³ to 0.92 g/cm³, 0.895 g/cm³ to 0.93 g/cm³, 0.90 g/cm³ to 0.92 g/cm³, or 0.908 g/cm³ to 0.919 g/cm³, but is not necessarily limited thereto.

In one embodiment, when the ethylene copolymer comprised in the middle layer comprises a linear low-density polyethylene and a polyolefin plastomer, a weight ratio between the linear low-density polyethylene and the polyolefin plastomer may be 5:95 to 40:60, 10:90 to 40:60, 10:90 to 30:70, 15:85 to 25:75, or 20:80.

In one embodiment, an absolute value of [the melt index of the outer layer] - [the melt index of the middle layer] and/or an absolute value of [the melt index of the inner layer] - [the melt index of the middle layer] may be 1.0 g/10 min or less, 0.9 g/10 min or less, 0.8 g/10 min or less, 0.7 g/10 min or less, 0.5 g/10 min or less, 0.4 g/10 min or less, 0.3 g/10 min or less, 0 g/10 min to 1.0 g/10 min, 0 g/10 min to 0.8 g/10 min, 0 g/10 min to 0.6 g/10 min, 0 g/10 min to 0.5 g/10 min, 0.1 g/10 min or 0.5 g/10 min, or 0.15 g/10 min to 0.5 g/10 min, but is not necessarily limited thereto.

In one embodiment, the ethylene copolymer may be a copolymer of ethylene and α-olefin, and the α-olefin is not particularly limited, but may be selected from, for example, propylene, 1-butene, 1-pentene, 1-hexene, 1-octene, 4-methyl-1-pentene, 1,3-butadiene, 1,4-pentadiene, 1,5-hexadiene, and/or mixtures thereof.

In one embodiment, the thickness(s) of the outer layer and/or the inner layer may be independently of each other 10% to 50%, 10% to 40%, 10% to 30%, 15% to 30%, or 20% to 25% of the total thickness of the polyethylene cling film, but is not necessarily limited thereto.

In one embodiment, the thickness of the middle layer may be 40% to 80%, 40% to 70%, 45% to 65%, or 0% to 60% of the total thickness of the polyethylene cling film, but is not necessarily limited thereto.

In one embodiment, a thickness ratio of the outer layer, the middle layer, and the inner layer may be 1:1:1 to 1:5:1, 1:1:1 to 1:4:1, 1:1.5:1 to 1:3.5:1, or 1:2:1 to 1:3:1, but is not necessarily limited thereto.

In one embodiment, the total thickness of the polyethylene cling film may be 5 µm to 100 µm, 5 um to 80 µm, 5 µm to 60 µm, 5 µm to 50 µm, 5 µm to 30 µm, 5 µm to 25 µm, 5 µm to 20 µm, 10 µm to 20 µm, or about 15 µm, but is not necessarily limited thereto. The polyethylene cling film according to one embodiment may have excellent tensile properties and resilience even at a small thickness of about 15 µm, and thus, it may be very convenient for consumers, sellers, and the like to use it for food packaging and the like.

In one embodiment, an anti-fogging agent may be prescribed, if necessary, in the inner layer for preventing a decrease in visibility of an internal product by water vapor and/or condensation water, and by further comprising the anti-fogging agent, decreased transparency of packaged goods may be prevented. In one embodiment, a film further comprising an anti-fogging agent forms a thin water film on the surface of the film, thereby preventing condensation of water droplets and keeping freshness of packaged food and the like for a long time. The anti-fogging agent may be selected and used without limitation as long as it is any anti-fogging agent known to a person skilled in the art of the disclosure in the present specification. For example, it may comprise an anionic surfactant, a non-ionic surfactant, and/or a cationic surfactant, or may be one or more selected from the group consisting of sorbitan-based surfactants such as sorbitan monostearate, sorbitan distearate, sorbitan monopalmitate, sorbitan dipalmitate, sorbitan monobehenate, sorbitan dibehenate, sorbitan monolaurate, and sorbitan dilaurate; glycerin-based surfactants such as glycerin monolaurate, glycerin dilaurate, diglycerin monopalmitate, diglycerin dipalmitate, glycerin monostearate, glycerin distearate, diglycerin monostearate, diglycerin distearate, diglycerin monolaurate, and diglycerin dilaurate; polyethylene glycol-based surfactants such as polyethylene glycol monostearate and polyethylene glycol monopalmitate; trimethylolpropane-based surfactants such as trimethylolpropane monostearate; diethanolalkylamine-based and diethanolalkylamide-based surfactants such as lauryldiethanolamine, oleyldiethanolamine, stearyldiethanolamine, lauryldiethanolamide, oleyldiethanolamide, and stearyldiethanolamide; pentaerythritol-based surfactants such as pentaerythritol monopalmitate, and mono- and distearate of polyoxyethylene sorbitan monostearate, polyoxyethylene sorbitan distearate, sorbitan-diglycerin condensate and mixtures thereof.

The polyethylene cling film according to one embodiment has an average strength (adhesiveness) of a corresponding section of 4.0 g/50 mm or more, as measured by bringing two of the same polyethylene cling films (width: 50 mm) into contact with each other, reciprocatingly pressing twice using a roller of 289 g, separating one end of the pressed film, and stretching it under the conditions of a tensile speed of 254 mm/min using UTM equipment while maintaining an angle of 180°. Thus, the cling film may not be easily detached by an external stimulus and maintain the attached state after attaching the film to an object. When the adhesiveness is about 4.0 g/50 mm or less or about 3.5 g/50 mm or less, the adhesiveness of the film is insufficient, and the film is inappropriate for use as a packaging film, and when the adhesiveness is about 8 g/50 mm or more or about 10 g/50 mm or more, the production process of the film is difficult or it is difficult to peel off (unwind) the film after easily attaching the films, and user difficulty may be increased when handing the film. The adhesive polyethylene according to one embodiment may have adhesiveness of 4.0 g/50 mm or more, 4.5 g/50 mm or more, 4.0 g/50 mm to 8.0 g/50 mm, 4.0 g/50 mm to 7.0 g/50 mm, or 4.5 g/50 mm to 6.5 g/50 mm, and thus, it has adhesion which allows easy film production (that is, excellent processability) and does not impair users' usage sensation.

The polyethylene cling film according to one embodiment has an elongation at break of 300% to 500% as measured at a tensile speed of 1,000 mm/min using UTM available from Instron, and thus, has enough flexibility for users to conveniently use the film and allows users to pack goods neatly. In addition, a packaging time may be reduced and an amount of film used is significantly decreased, and thus, sustainability in terms of environmental aspect may be high. When the elongation at break is about 300% or less or about 200% or less, the film is stiff so that it is difficult to pack goods neatly, and in particular, it may be difficult to package (for example, seal) the surface of goods having various shapes. When the elongation at break is about 500% or more or about 480% or more, the film becomes too soft so that the film may be easily deformed, and the left and right widths of the film become uneven or the film is rolled in the production process of the film, and thus, film production may not be easy. Since the polyethylene cling film according to one embodiment may have an elongation at break of 300% to 480% or 320% to 460%, the production process of the film may be easy and the users' usage sensation may not be impaired.

The polyethylene cling film according to one embodiment may have a recovery rate of 70% to 100%, 75% to 100%, 80% to 100%, or 80% to 95% in a tensile (elongation) range (maintaining a tensile state for 60 seconds) of 20% to 40%, or 20% to 30%, as a real use range.

The polyethylene cling film according to one embodiment may have a haze of 1.0 or less, 0.9 or less, 0.8 or less, 0.2 to 1.0, or 0.3 to 1.0. Since the cling film according to one embodiment has high transparency, when a good is packaged using the film, the film does not hide the label or the like attached to the good, so that it is easy to identify which item it is even after packaging. In addition, when food or the like is packaged, the good may be made look fresh.

One implementation provides a method of producing a polyethylene cling film.

In one embodiment, when an outer layer, a middle layer, and an inner layer are laminated, the lamination method is not particular, but may be cast using co-extrusion, dry lamination, extrusion lamination, and the like. As an example of the method of producing a polyethylene cling film according to one embodiment, the polyethylene cling film of one embodiment may be produced by a co-extrusion method which makes a structure of two or more layers at once, and specifically, may be produced by a method in which an extrusion is spread into a flat shape comprisinga structure of two or more layers (for example, three layers) while passing through a T-shaped discharge port (T-die) and the resin in each layer is combined to make a film (casting) while exiting the discharge port.

One implementation provides a packaging film for food or non-food comprising the polyethylene cling film. The use of the polyethylene cling film according to one embodiment is not limited as long as the film is used as a film requiring adhesion, resilience, and the like, and for example, the film may be used in packaging (wrapping) of the surface of, for example, food products, medicines, and industrial parts, and there is no limitation in home or business use.

Provided herein is a method for reducing greenhouse gas emissions from a polyethylene cling film, comprising: preparing a recyclable polyethylene cling film comprising: an outer layer, a middle layer, and an inner layer, wherein the outer layer, the middle layer, and the inner layer independently of one another comprise an ethylene copolymer, each layer independently has a melt index (MI) of 1.0 g/10 min to 5.0 g/10 min as measured in accordance with ASTM D1238, an absolute value of [the melt index of the outer layer or the inner layer] - [the melt index of the middle layer] is 1.0 g/10 min or less, and the outer layer and the inner layer each independently have a density of 0.89 g/cm³ to 0.93 g/cm³, and the middle layer has a density of 0.87 g/cm³ to 0.91 g/cm³.

Hereinafter, the examples and the experimental examples of the present disclosure will be described in detail. However, the examples and the experimental examples described later are only illustrative of a part of the present disclosure, and the present disclosure is not limited thereto.

### EXAMPLES

The melt index of the copolymer in the following preparation example, examples, comparative examples, and experimental examples was measured as an extrusion speed of an ethylene copolymer melted in accordance with the ASTM D1238 standard (190°C, 2.16 kg load condition). In addition, the density was measured in accordance with the ASTM D792 standard using autodensimeter equipment.

### <Preparation Example>

A polyolefin plastomer (POP) and a linear low-density polyethylene (LLDPE) having the melt index (MI) and the density listed in Table 1 as an ethylene copolymer were purchased from SKGC Co., Ltd. and prepared. At this time, LLDPE-A was an ethylene-butene copolymer, LLDPE-B was an ethylene-octene copolymer, and both were prepared using a Ziegler-Natta catalyst. In addition, POP-A, POP-B, and POP-C were all an ethylene-octene copolymer and prepared using a metallocene catalyst.

**[Table 1]**

| | | MI | Density |
|---|---|---|---|
| POP | POP-A | 3.5 | 0.900 |
| | POP-B | 3.0 | 0.880 |
| | POP-C | 1.0 | 0.885 |
| LLDPE | LLDPE-A | 2.8 | 0.919 |
| | LLDPE-B | 3.0 | 0.919 |

| | | | |
|---|---|---|---|
| (Mi unit: g/10 min; density unit: g/cm³) | | | |

### <Examples 1 to 6>

The cling films of Examples 1 to 6 were produced using 3-layer co-extrusion casting equipment, and the compositions of the outer layer, the middle layer, and the inner layer and the thickness ratio of each layer were as shown in the following Table 2.

### <Comparative Examples 1 to 6>

The films of Comparative Examples 1 to 6 were produced in the same manner as in the examples, except that the compositions of the films and the thickness ratio of each layer were as shown in the following Table 3. However, Comparative Example 1 was produced as a single layer, Comparative Examples 2 to 4 were produced as 2-layer films, and Comparative Example 6 used a low-density polyethylene-based film (PO film) commercially available from SAMYOUNG CHEMICAL Co. (PUREWRAP^{™}).

In the following Tables 2 and 3, when POP and LLDPE were mixed and used in the outer layer, the middle layer, and/or the inner layer, the weight ratio was indicated in parentheses, and the converted density and MI of the outer layer, the middle layer, and the inner layer were shown, respectively. In addition, the thickness ratio refers to the thickness ratio of the outer layer, the middle layer, and the inner layer, and the total thickness refers to the total thickness of the produced film.

**[Table 2]**

| | | Example 1 | Example 2 | Example 3 | Example 4 | Example 5 | Example 6 |
|---|---|---|---|---|---|---|---|
| Outer layer | composition | LLDPE-A/ POP-A (40/60) | LLDPE-A/ POP-A (40/60) | LLDPE-A/ POP-A (40/60) | LLDPE-A | LLDPE-B | LLDPE-A |
| | MI | 3.2 | 3.2 | 3.2 | 2.8 | 3.0 | 2.8 |
| | Density | 0.908 | 0.908 | 0.908 | 0.919 | 0.919 | 0.919 |
| Middle layer | composition | POP-A | POP-A | LLDPE-A/ POP-B (20/80) | POP-B | POP-B | POP-B |
| | MI | 3.5 | 3.5 | 3.0 | 3.0 | 3.0 | 3.0 |
| | Density | 0.900 | 0.900 | 0.889 | 0.880 | 0.880 | 0.880 |
| Inner layer | composition | LLDPE-A/ POP-A (40/60) | LLDPE-A/ POP-A/ anti-fogging agent (30/60/10) | LLDPE-A/ POP-A (40/60) | LLDPE-A | LLDPE-B | LLDPE-A |
| | MI | 3.2 | 3.2 | 3.2 | 2.8 | 3.0 | 2.8 |
| | Density | 0.908 | 0.908 | 0.908 | 0.919 | 0.919 | 0.919 |
| Thickness ratio | | 1:3:1 | 1:3:1 | 1:3:1 | 1:2:1 | 1:3:1 | 1:3:1 |
| Total thickness | | 15 | 15 | 15 | 40 | 40 | 40 |

| | | | | | | | |
|---|---|---|---|---|---|---|---|
| (MI unit: g/10 min; density unit: g/cm3; thickness unit: µm) | | | | | | | |

**[Table 3]**

| | | Comparative Example 1 | Comparative Example 2 | Comparative Example 3 | Comparative Example 4 | Comparative Example 5 | Comparative Example 6 |
|---|---|---|---|---|---|---|---|
| Outer laye | composition | LLDPE-A | LLDPE-B/ POP-A (40/60) | LLDPE-A/ POP-A (40/60) | LLDPE-A/ POP-A (40/60) | LLDPE-A | Product commercially available from S (low-density polyethylene -based film) |
| | MI | 2.8 | 3.3 | 3.2 | 3.2 | 2.8 | |
| | Density | 0.919 | 0.908 | 0.908 | 0.908 | 0.919 | |
| Middle layer | composition | - | - | - | | POP-C | |
| | MI | | | | | 1.0 | |
| | Density | | | | | 0.885 | |
| Inner layer | composition | - | LLDPE-B/ POP-A (40/60) | LLDPE-A/ POP-A (40/60) | LLDPE-A/ POP-A/ anti-fogging agent (30/60/10) | LLDPE-A | |
| | MI | | 3.3 | 3.2 | 3.2 | 2.8 | |
| | Density | | 0.908 | 0.908 | 0.908 | 0.919 | |
| Thickness ratio | | - | 1:1 | 1:1 | 1:1 | 1:3:1 | 1:3:1 |
| Total thickness | | 40 | 12 | 12 | 12 | 40 | 40 |

| | | | | | | | |
|---|---|---|---|---|---|---|---|
| (MI unit: g/10 min; density unit: g/cm³; thickness unit: µm) | | | | | | | |

### <Experimental Example 1> Evaluation of resilience

When the surface of an object is covered or the entire object is packaged using a cling film, resilience which is a pulling force of the film itself is required for maintaining the packaging state of the surface of the object or the entire object for a long time. Thus, the resilience of the films produced in the examples and the comparative examples were analyzed, and the results are shown in the following Tables 4 and 5. The resilience was measured by preparing the films of the examples and the comparative examples at 11.5 cm, stretching the films to 5%, 10%, 15%, 20%, 25%, 30%, 35%, 40%, 45%, and 50% of their original lengths at a rate of 500 mm/min using Universal Test Machine equipment (UTM, Instron), maintaining the stretched state for a certain time (60 seconds), and removing the force to measure the final length of the film to confirm a degree of recovery to the length before stretching.

**[Table 4]**

| | Example 1 | Example 2 | Example 3 | Example 4 | Example 5 | Example 6 |
|---|---|---|---|---|---|---|
| 0% | 11.5 | 11.5 | 11.5 | 11.5 | 11.5 | 11.5 |
| 5% | 11.5 | 11.5 | 11.5 | 11.5 | 11.6 | 11.5 |
| 10% | 11.6 | 11.6 | 11.6 | 11.5 | 11.7 | 11.5 |
| 15% | 11.7 | 11.7 | 11.7 | 11.6 | 11.7 | 11.5 |
| 20% | 11.9 | 11.8 | 11.8 | 11.8 | 11.8 | 11.6 |
| 25% | 12.2 | 12.0 | 12.0 | 12.0 | 12.0 | 11.8 |
| 30% | 12.5 | 12.3 | 12.3 | 12.3 | 12.2 | 12.0 |
| 35% | 12.9 | 12.7 | 12.5 | 12.7 | 12.6 | 12.5 |
| 40% | 13.4 | 13.1 | 12.7 | 13.1 | 13.1 | 13.0 |
| 45% | 13.7 | 13.8 | 13.2 | 13.6 | 13.5 | 13.3 |
| 50% | 14.0 | 14.2 | 13.7 | 14.1 | 14.0 | 13.6 |

| | | | | | | |
|---|---|---|---|---|---|---|
| (unit: cm) | | | | | | |

**[Table 5]**

| | Comparative Example 1 | Comparative Example 2 | Comparative Example 3 | Comparative Example 4 | Comparative Example 5 | Comparative Example 6 |
|---|---|---|---|---|---|---|
| 0% | 11.5 | 11.5 | 11.5 | 11.5 | 11.5 | 11.5 |
| 5% | 11.6 | 11.6 | 11.6 | 11.6 | 11.5 | 11.6 |
| 10% | 11.6 | 11.6 | 11.6 | 11.6 | 11.5 | 11.7 |
| 15% | 11.9 | 11.9 | 11.8 | 11.8 | 11.6 | 11.9 |
| 20% | 12.2 | 12.2 | 11.9 | 11.9 | 11.7 | 12.2 |
| 25% | 12.5 | 12.5 | 12.2 | 12.3 | 12.1 | 12.5 |
| 30% | 12.8 | 12.8 | 12.6 | 12.7 | 12.4 | 12.9 |
| 35% | 13.2 | 13.2 | 13.2 | 13.2 | 12.9 | 13.2 |
| 40% | 13.5 | 13.5 | 13.5 | 13.6 | 13.3 | 13.5 |
| 45% | 14.0 | 14.1 | 14.0 | 14.1 | 13.8 | 14 |
| 50% | 14.5 | 14.7 | 14.5 | 14.5 | 14.2 | 14.5 |

| | | | | | | |
|---|---|---|---|---|---|---|
| (unit: cm) | | | | | | |

As confirmed in Tables 4 and 5, the films of the examples were recovered closer to the length before stretching than the films of the comparative examples, and thus, it was found that the films of the examples had better resilience, and in particular, the high resilience of the examples in the tensile ratio of about 20% to 40%, which is the actual use range, were confirmed.

### <Experimental Example 2> Evaluation of adhesiveness

High adhesiveness of a film is required for maintaining an adhesion state without easy detachment by external stimuli after attaching the cling film to an object. Thus, the adhesiveness of the films produced in the examples and the comparative examples was measured, and the results are shown in the following Table 6. The adhesiveness was measured by bringing two of the same films (film width: 50 mm) into contact with each other, reciprocatingly pressing the films twice using a roller of 289 g, separating one end of the pressed film, stretching it under the tensile speed condition of 254 mm/min using UTM equipment while maintaining an angle of 180°, and confirming the average strength of the corresponding section.

### <Experimental Example 3> Evaluation of transparency

When the surface of an object is covered or the entire object is packaged using the cling film, in order to allow the users to visually identify the color or the like of the packaged object even after packaging the object, or when the packaged object is food, in order to show food with high freshness, it is important to secure the high transparency of the film. Thus, the hazes of the films produced in the examples and the comparative examples were measured, and the results are shown in the following Table 6. The haze was measured using a Haze meter available from Nippon Denshoku.

**[Table 6]**

| | Adhesiveness | Haze |
|---|---|---|
| Example 1 | 6.2 | 0.5 |
| Example 2 | 4.7 | 0.5 |
| Example 3 | 6.0 | 0.7 |
| Comparative Example 2 | 3.6 | 0.8 |
| Comparative Example 3 | 4.7 | 0.8 |
| Comparative Example 4 | 3.8 | 0.7 |
| Comparative Example 6 | 3.1 | - |

| | | |
|---|---|---|
| (Adhesiveness unit: g/50 mm; haze unit: %) | | |

As confirmed in Table 6, it was found that the films of the examples all had high adhesiveness of about 4.0 g/50 mm or more and are efficient for use as a film for sticking to and packaging objects of various materials, and since the films of the examples showed adhesiveness in a range of about 4.0 g/50 mm to 7.0 g/50 mm, a usability degradation problem due to excessively high adhesiveness may be improved. In addition, it was confirmed that the films of the examples secured transparency with the haze of 1.0 or less.

### <Experimental Example 4> Evaluation of elongation at break

The cling film for packaging an object needs to secure softness of the film. Thus, the elongation at break of the films produced in the examples and the comparative examples was measured, and the results are shown in the following Table 7. The elongation at break was measured under the tensile speed conditions of 1,000 mm/min using UTM (Instron) after preparing the films of the examples and the comparative examples at 11.5 cm.

**[Table 7]**

| | Elongation at break |
|---|---|
| Example 1 | 341 |
| Example 2 | 375 |
| Example 3 | 443 |
| Example 5 | 335 |
| Example 6 | 333 |
| Comparative Example 2 | 189 |
| Comparative Example 3 | 274 |
| Comparative Example 4 | 270 |
| Comparative Example 5 | 221 |
| Comparative Example 6 | 169 |

### (Elongation at break unit: %)

As confirmed in Table 7, since the films of the examples showed an elongation of about 300% or more, an object may be packaged using a smaller amount of film consumed and sealed effectively.

### <Experimental Example 5> Evaluation of holding force

When the surface of an object is covered or the entire object is packaged using a cling film, a holding force which is a pulling force of the film itself is required for maintaining the packaging state of the surface of the object or the entire object for a long time. Thus, the holding force of the films produced in the examples was analyzed, and the results are shown in the following Table 8. The holding force was measured by preparing the films of the examples and the comparative examples at 11.5 cm and then using Universal Test Machine equipment (Instron) to stretch the films at a speed of 1000 mm/min, and this was performed by a method of confirming film pulling strength measured in the UTM equipment after maintaining the films for 60 seconds under the 30% elongation conditions similar to the actual use elongation section.

**[Table 8]**

| | Holding force based on 30% elongation |
|---|---|
| Example 1 | 0.19 |
| Example 2 | 0.17 |
| Example 3 | 0.13 |
| Example 4 | 0.14 |
| Example 5 | 0.12 |
| Example 6 | 0.15 |

| | |
|---|---|
| (Holding force unit: kgf/mm²) | |

As confirmed in Table 8, the films of the examples had a holding force of about 0.1 kgf/mm² to 0.2 kgf/mm² based on 30% elongation, and at about 0.08 kgf/mm² or less, the holding force was low so that the characteristic of the film to remain in the state of packaging an object may be deteriorated and at about 0.3 kgf/mm² or more the holding force is too high, so that easy packaging is not allowed for users to deteriorate usage.

The present disclosure relates to a polyethylene cling film, and the polyethylene cling film according to one embodiment has a 3-layer structure and also has a specific range of a difference between the melt index of an outer layer and/or an inner layer and the melt index of a middle layer, thereby shows excellent adhesiveness and resilience for use as a packaging film for food and/or non-food.

Hereinabove, though one implementation has been described in detail by the detailed examples and the experimental examples, the scope of one implementation is not limited to the specific examples, and should be construed by the appended claims.

## Claims

1. A polyethylene cling film comprising: an outer layer, a middle layer, and an inner layer,
wherein the outer layer, the middle layer, and the inner layer independently of one another comprise an ethylene copolymer, each layer independently has a melt index (MI) of 1.0 g/10 min to 5.0 g/10 min as measured in accordance with ASTM D1238, an absolute value of [the melt index of the outer layer or the inner layer] - [the melt index of the middle layer] is 1.0 g/10 min or less, and
the outer layer and the inner layer each independently have a density of 0.89 g/cm³ to 0.93 g/cm³, and the middle layer has a density of 0.87 g/cm³ to 0.91 g/cm³.

2. The polyethylene cling film of claim 1, wherein the ethylene copolymer comprised in the outer layer and the inner layer independently of each other comprises a linear low-density polyethylene (LLDPE) having a melt index of 2.0 g/10 min to 4.0 g/10 min as measured in accordance with ASTM D1238 and a density of 0.89 g/cm³ to 0.93 g/cm³.

3. The polyethylene cling film of claim 1, wherein the ethylene copolymer comprised in the middle layer comprises a polyolefin plastomer (POP) having a melt index of 2.0 g/10 min to 5.0 g/10 min as measured in accordance with ASTM D1238 and a density of 0.87 g/cm³ to 0.91 g/cm³.

4. The polyethylene cling film of claim 2, wherein the ethylene copolymer comprised in the outer layer or the inner layer independently of each other further comprises a polyolefin plastomer having a melt index of 2.0 g/10 min to 5.0 g/10 min as measured in accordance with ASTM D1238 and a density of 0.87 g/cm³ to 0.91 g/cm³,
preferably, wherein a weight ratio between the linear low-density polyethylene and the polyolefin plastomer comprised in the outer layer and/or the inner layer is indepently 20:80 to 60:40.

5. The polyethylene cling film of claim 3, wherein the ethylene copolymer comprised in the middle layer further comprises a linear low-density polyethylene having a melt index of 2.0 g/10 min to 4.0 g/10 min as measured in accordance with ASTM D1238 and a density of 0.89 g/cm³ to 0.93 g/cm³,
preferably, wherein a weight ratio between the linear low-density polyethylene and the polyolefin plastomer comprised in the middle layer is 5:95 to 40:60.

6. The polyethylene cling film of any one of claims 1 to 5, wherein an absolute value of [the melt index of the outer layer or the inner layer] - [the melt index of the middle layer] is 0.8 g/10 min or less.

7. The polyethylene cling film of any one of claims 1 to 6, wherein the ethylene copolymer is a copolymer of ethylene with a monomer selected from propylene, 1-butene, 1-pentene, 1-hexene, 1-octene, 4-methyl-1-pentene, 1,3-butadiene, 1,4-pentadiene, 1,5-hexadiene, or a mixture thereof.

8. The polyethylene cling film of any one of claims 1 to 7, wherein thicknesses of the outer layer and the inner layer are independently of each other 10% to 50% of a total thickness of the polyethylene cling film.

9. The polyethylene cling film of any one of claims 1 to 8, wherein a thickness of the middle layer is 40% to 80% of a total thickness of the polyethylene cling film.

10. The polyethylene cling film of any one of claims 1 to 9, wherein a thickness ratio of the outer layer, the middle layer, and the inner layer is 1:1:1 to 1:5:1.

11. The polyethylene cling film of any one of claims 1 to 10, wherein the polyethylene cling film has a thickness of 5 µm to 100 µm.

12. The polyethylene cling film of any one of claims 1 to 11, wherein the inner layer further comprises an anti-fogging agent.

13. The polyethylene cling film of any one of claims 1 to 12, wherein the polyethylene cling film has an average strength of 4.0 g/50 mm or more as measured by bringing two of the the polyethylene cling films having a width of 50 mm into contact with each other, reciprocatingly pressing the films twice using a roller of 289 g, separating one end of the pressed film, and stretching it under the tensile speed condition of 254 mm/min using UTM equipment while maintaining an angle of 180°.

14. The polyethylene cling film of any one of claims 1 to 13, wherein the polyethylene cling film has an elongation at break of 300% to 500% as measured at a tensile speed of 1,000 mm/min using UTM available from Instron.

15. A packaging film for food or non-food comprising the polyethylene cling film according to any one of claims 1 to 14.
